# EUROPEAN PATENT SPECIFICATION

(11) **EP 0 704 687 B1**
(45) Date of publication and mention of the grant of the patent: **08.04.1998**
(21) Application number: 95115293.3
(22) Date of filing: 28.09.1995
(51) Int. Cl.: G01L 9/00, G01L 19/00, F02D 41/24

(54) **A multifunction sensor device**
Sensorvorrichtung mit mehreren Funktionen
Dispositif capteur multifonctionnel

(30) Priority: 30.09.1994 IT TO940763
(43) Date of publication of application: 03.04.1996
(73) Proprietor: MAGNETI MARELLI S.p.A., 20145 Milano (IT)
(72) Inventor: Farhat, Adnan, I-27020 Travacò Siccomario (Pavia) (IT); Timossi, Gian Maria, I-29100 Piacenza (IT)
(74) Representative: Quinterno, Giuseppe

(56) References cited:
- DE-A- 3 108 300
- DE-C- 4 132 391
- FR-A- 2 442 966
- PATENT ABSTRACTS OF JAPAN vol. 013 no. 443 (P-941) ,5 October 1989 & JP-A-01 172718 (MATSUSHITA ELECTRIC IND CO LTD) 7 July 1989,

## Description

The present invention relates in general to sensors intended to be used in association with internal combustion engines. More specifically, the present invention relates to a multifunction sensor device of the kind defined in the preamble of Claim 1.

It is known that current electronic systems for controlling the ignition/injection of internal combustion engines need sensors able to detect a plurality of quantities relating to the operation of the engine. Typically, sensors able to measure the following quantities are needed:
- absolute aspirated air pressure,
- fuel pressure,
- aspirated air temperature.

In current fuel injection systems of the type known as "speed density" systems, the pressure and the temperature of the aspirated air is detected for the purpose of calculating the quantity of aspirated air, and therefore the correct quantity of fuel to be injected. The pressure of the fuel, on the other hand, is regulated in a totally mechanical way.

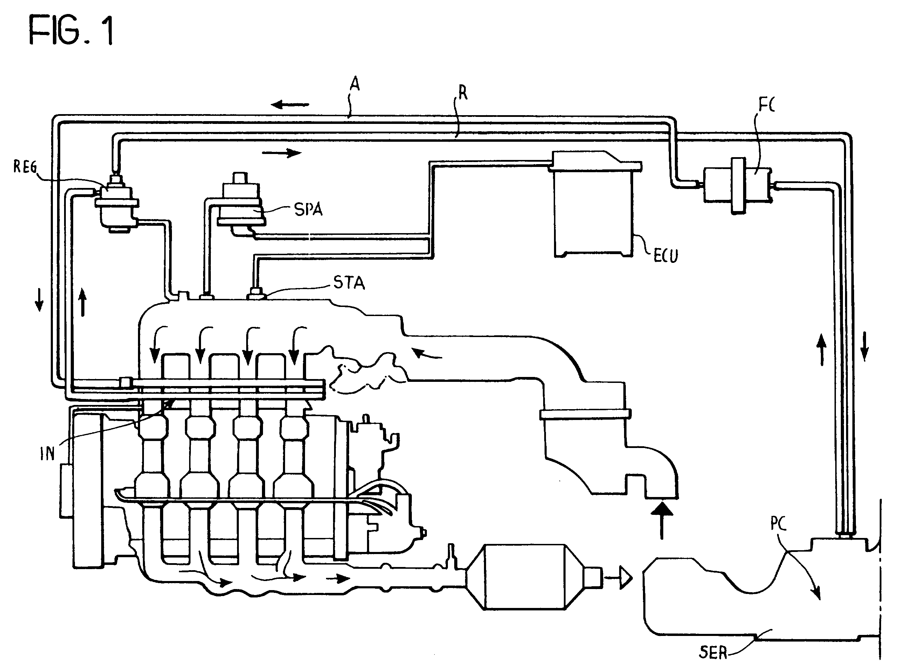

For a better understanding a conventional type of fuel supply system will now be described with reference to Figure 1. In a system of this type an electric fuel pump PC delivers fuel in excess from a fuel reservoir SER to an injector IN via a delivery pipe A. A pressure regulator REG, typically a diaphragm, positioned in the fuel delivery pipe A maintains a constant pressure at the injectors IN constant by returning the excess fuel delivered from the pump PC to the reservoir SER via a return pipe R.

The system is naturally controlled by an electronic central control unit ECU connected, as already indicated, to an aspirated air pressure sensor SPA and an aspirated air temperature sensor STA. Given that the fuel pressure at the injectors IN is maintained constant by the pressure regulator REG, the electronic central control unit ECU controls the quantity of fuel injected by acting on the opening times of the injectors IN.

In the near future this fuel pressure regulation system will be abandoned for the following reasons:
- high emission of fuel vapours mainly because of the temperature reached by the fuel when it is close to the engine (with consequent pollution problems),
- cost in installation of the return pipe R.

Both these problems can be resolved by arranging that the fuel pump PC delivers fuel to the injectors IN at the correct pressure without delivering an excess which must consequently be returned. To achieve this objective it is, however, necessary that the fuel pump PC be controlled by the central control unit ECU in dependence on the fuel to be delivered.

It is, therefore, necessary that the central control unit ECU should know the fuel pressure in relation to the pressure existing in the induction manifold. More specifically, it is necessary that the central control unit ECU be made aware of the differential between the two pressures. The adoption of a further sensor is therefore necessary, that is a sensor for detecting the fuel pressure with respect to the pressure in the manifold. This sensor therefore allows elimination of the traditional mechanical pressure regulator REG as well as the fuel return pipe R.

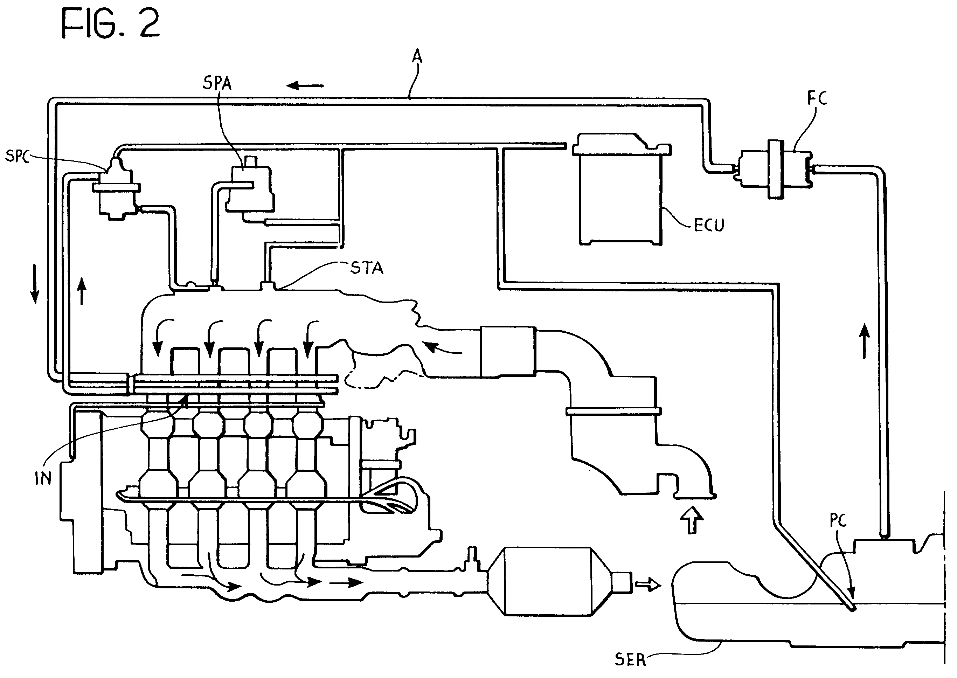

This situation is represented in Figure 2 in which the parts and elements already described with reference to Figure 1 have again been attributed the same reference letters. As can be seen from Figure 2, in this case only the fuel delivery pipe A is present whilst the pressure regulator REG and the return pipe R are absent.

There is also provided a connection between the electronic central control unit ECU and the fuel pump PC which in this case operates under electronic control in such a way as to deliver exactly the necessary quantity of fuel to the injectors IN. In the drawing, the absolute pressure sensors SPA and the air temperature STA and fuel pressure sensor SPC are also visible. These sensors SPA, STA and SPC are naturally connected to the electronic central control unit ECU in such a way as to provide it with the information necessary for management of the engine.

The control of the fuel pump PC further allows an increase in the performance of the entire fuel supply system, thereby allowing the central control unit ECU to interact not only on the opening time of the injectors IN, but also on the fuel pressure.

The fuel injection/ignition systems close to production will, therefore, be provided with a further sensor SPC in addition to those currently employed. This further sensor SPC is intended to be subjected to modest pressures, of a few bar, but must operate in a particularly aggressive environment from the chemical point of view. It can, therefore, be convenient to use ceramic thick film technology.

This technology has, however, almost been abandoned for economic reasons as far as the production of sensors intended for use in induction manifolds is concerned. Such sensors are currently made using micro-worked silicon technology.

Ceramic thick film technology has however an enormous advantage with respect to such silicon technology. It is, in fact, possible to make several measurement bridges on a single ceramic substrate by means of screen printing, in this way allowing the production of several sensor elements at costs comparable with that of the production of a single sensor.

The object of the present invention is that of providing a multifunction sensor which integrates the above explained functions in a single device with consequent reductions in cost and complexity.

The sensor of the present invention is associated with a heat engine and comprises a casing containing first pressure sensor means and second pressure sensor means formed on a support, the said first and second sensor means being connected by respective apertures provided in the said casing to a first and a second environment, separate from one another, for the purpose of detecting the pressure in the said first and second environment respectively.

A sensor of this type is known from Japanese Patent Publication JP-A-1172718 for measuring the absolute pressures of two fluids flowing through introducing pipes, which are connected to an intake manifold and the atmosphere or a turbo-intake port. The device comprises a vacuum chamber and a pressure sensitive diaphragm having opposite portions connected through holes to the two pipes, for measuring the absolute pressures of the two fluids at the same time. This device is rather costly and is insufficient to provide all the information necessary for an optimum management of the operation of the engine.

French Patent Application FR-A-2 442 966 relates to a measurement device for sensing the pressure and the temperature of the aspirated air flowing through the induction manifold of an internal combustion engine, including a manometric capsule, an NTC or PTC resistor for the measurement of the temperature, and associated circuitries. The capsule and a support for the resistor and the circuitries are placed in a common casing screwed to the manifold. This device is inherently costly and should be associated to another pressure-sensing device to provide also the pressure information for the fuel delivery pipe.

German Patent Application DE-A-3 108 300 describes a sensor for measuring the pressure of the aspirated air in an internal combustion engine, including a common ceramic substrate of planar shape and two glass membranes of cap shape, having the periphery sealed to the substrate through a thick film technology and subjected to the air pressure. The membranes are provided with resistors whose values are variable upon deformation. Said resistors are connected in a bridge circuit. One of the chambers defined by the membranes is tight sealed to the substrate at a vacuum pressure, whilst the other chamber is coupled to the environment to compensate for variations of the resistance of the resistors due to variations of temperature. Also this sensor is insufficient to fully meet the needs of a fuel supply system of a combustion engine.

German Patent Application DE-A-4 132 391 relates to a sensor connected to two environments, including two measurement membranes, sandwiched between two insulated support plates in corresponding chambers and coupled to the environments through two separation membranes and pressure transmission fluids. The measurement membranes face associated electrodes deposited on one of the plates and their deformations cause variations of capacitance which are representative of the pressure difference between the two environments. Said capacitance variations are treated by an electronic circuit. Also this sensor is costly and provides information insufficient for the full management of a fuel supply system for a combustion engine.

According to the present invention, the above-mentioned object is achieved by a multifunction sensor having the features defined in Claim 1.

Further advantages and characteristics of the present invention will become apparent from the following detailed description given with the aid of the attached drawings, in which:
- Figures 1 and 2 schematically represent two fuel supply systems according to the prior art and have already been described;
- Figure 3 schematically represents a fuel supply system employing the device according to the present invention;
- Figure 4 schematically represents an exploded view of some of the components of the device according to the present invention;
- Figures 5 and 6 schematically represent a sub-group of the device according to the invention in two different stages of assembly;
- Figure 7 represents the device according to the invention, shown assembled;
- Figures 8 and 9 represent two details of the device in Figure 7, seen from two different angles;
- Figure 10 schematically illustrates the functional circuit diagram of the operation of the device according to the invention.

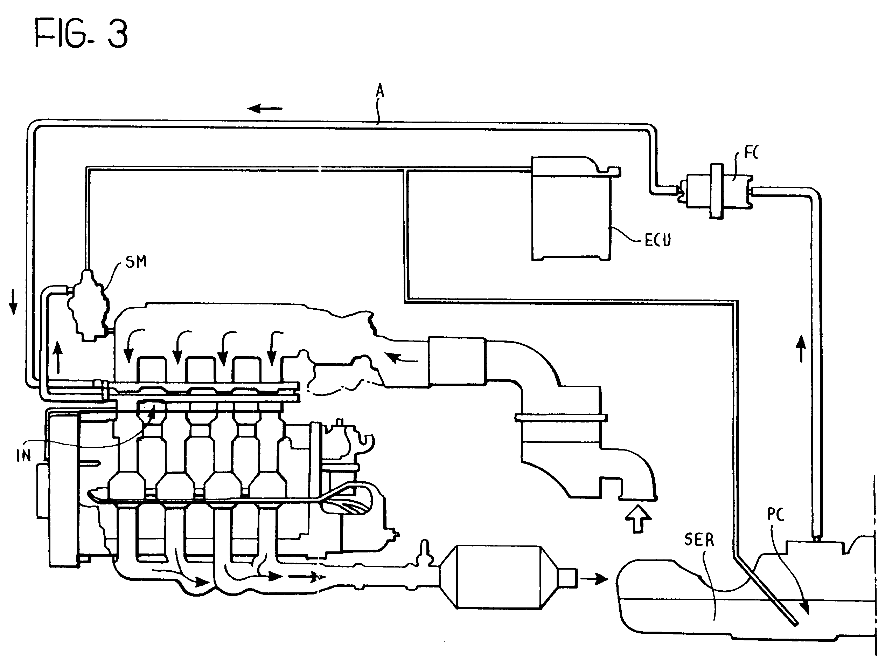

For a better understanding Figure 3 illustrates a fuel supply system similar to the system in Figure 2 using a multifunction sensor SM according to the invention. As can be seen, the system is significantly simplified in that the three previously used sensors are now replaced by a single sensor SM connected to the induction manifold and the fuel delivery pipe A.

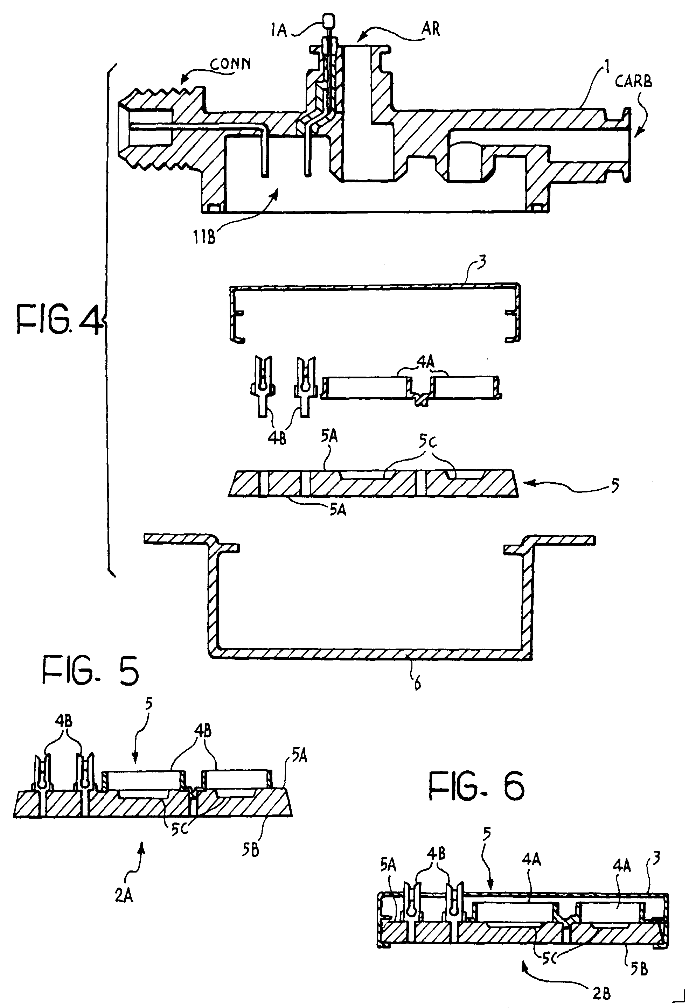

The sensor SM is, therefore, able to provide the central control unit ECU with all the information it requires, by means of a single communication line. The sensor SM will now be described in more detail with reference to Figures 4, 5 and 6.

The multifunction sensor SM according to the present invention is essentially constituted by the following elements.

A plastics casing 1 in which are formed two pressure take-off points one AR for the aspirated air and a second CARB for the fuel. In this plastics casing 1 there are also co-moulded a temperature sensor 1A, for example of the NTC type, situated close to the air take-off point AR, and a set of terminals 11B for the electrical connections. There may be from three to five of these terminals 11B. In the first case, there are two supply terminals, ground and +5V and a third terminal to which is sent information relating to the three measured quantities: fuel pressure, air pressure and air temperature, for example serially coded. In the second case (five terminals) as well as the two supply terminals there are three terminals each of which is dedicated to one of the measured quantities.

Within this plastics casing 1 there is in turn disposed a pre-assembled unit 2B, visible in Figure 6, constituted in turn by a metal shield 3 for protection against radio frequencies and by the pressure sensor 5 itself.

This latter is constituted by a ceramic support 5B on which is adhered, by means of glass screen printing, a second ceramic substrate 5A of rectangular form. The said two ceramic substrates 5B, 5A are shaped in such a way that during the adhesion they form two pressure-tight sealed chambers 5C. These chambers 5C ensure that both the measured fuel pressure and air pressure are absolute.

The areas of the ceramic substrate 5A corresponding to the chambers 5C constitute the sensing elements of the sensor SM. In these zones are screen printed two Wheatstone bridges which transduce the deformation of the ceramic membrane 5A into electrical signals according to the widely known principle piezo resistive effect.

On the ceramic substrate 5A is also mounted an electronic microprocessor circuit responsible for the processing of the signal of both the sensing elements and, in the case where a serial coding of the signals is required, also the air temperature signal.

On the substrate 5A there are further provided terminals 4B for connection to the assembly of terminals 11B, and two sealed cylinders 4A having respective 0-ring type seals. This assembly forms the unit 2A visible in Figure 5.

The pre-assembled unit 2B formed by the unit 2A plus the screen 3, once fitted into the plastics casing 1, is enclosed by a lower cover 6 of metal, for example steel, which also has the function of completing the shield 3 for protection against radio frequencies.

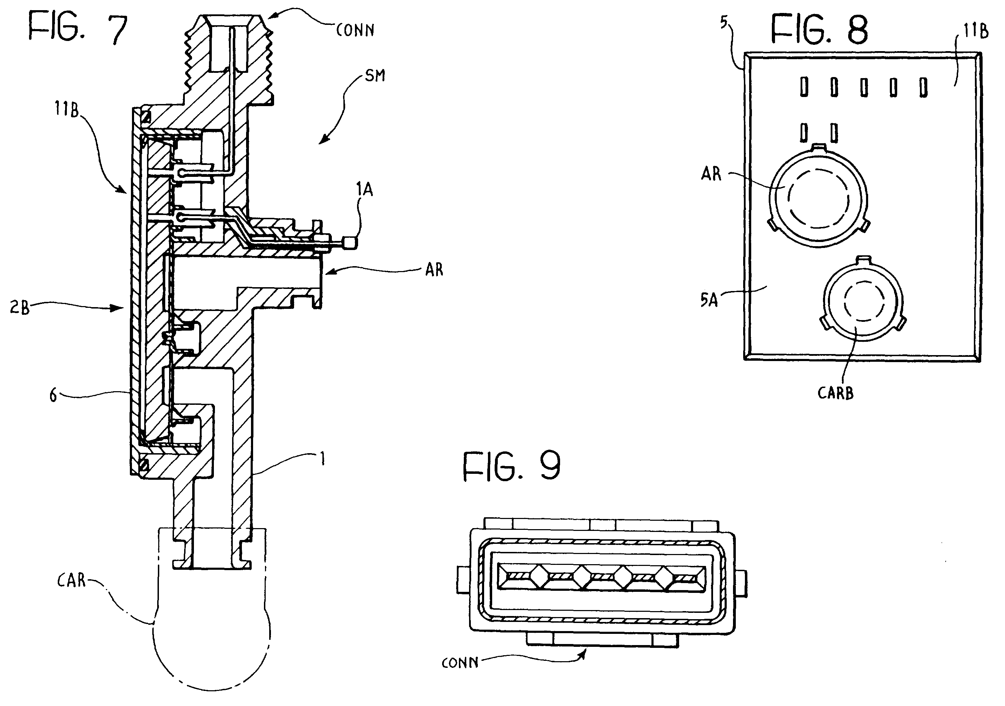

In Figure 7 the complete assembled device SM is represented, in which there is also visible a connector CARB for connection to the fuel delivery pipe A. The aperture AR, for detecting the air pressure, and the air temperature via the temperature sensor 1A, is on the other hand intended to be connected to the engine induction manifold.

In Figure 8 there is shown a view of the sensor 5 in which can be seen the circular areas of the ceramic membrane 5A corresponding to the chambers 5C for measuring the air pressure AR and fuel pressure CARB, and the electrical connectors 11B.

In Figure 9 is shown a view of a detail of the device in Figure 7 representing a connector CONN for connection of a connection line to the central control unit ECU.

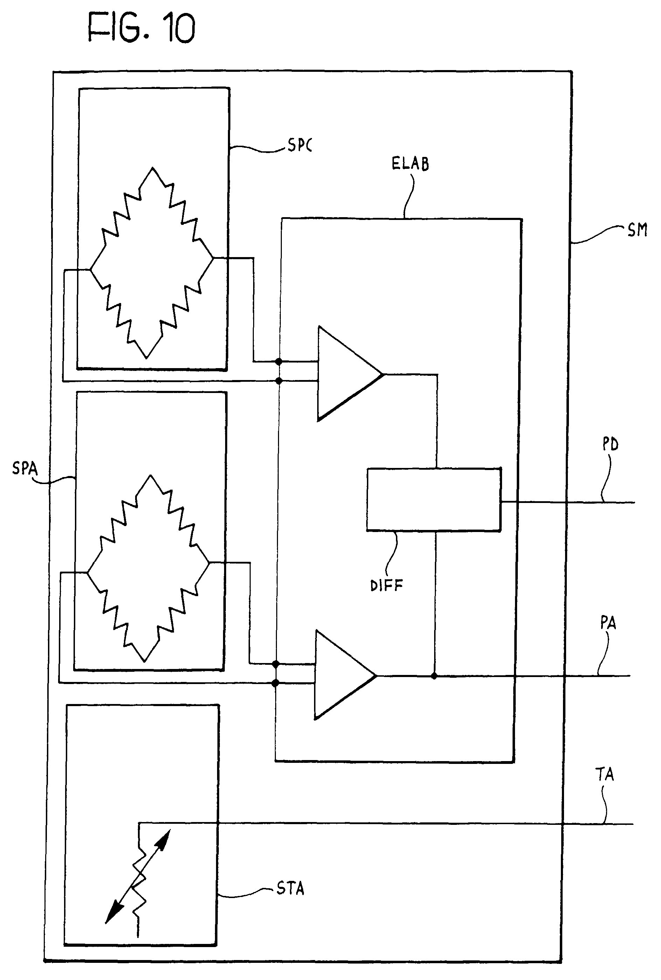

In Figure 10 there is represented a functional circuit diagram of the sensor SM. As can be seen, it illustrates the fuel pressure sensor SPC and air pressure sensor SPA, and the air temperature sensor STA formed by means of the sensor 1A. A processing circuit ELAB is also visible, intended for processing the signals coming from the two pressure sensors SPC and SPA. This processor circuit ELAB forms a signal PD indicative of the pressure differential between air and fuel.

This signal PD is obtained substantially by means of a subtracter circuit DIFF operating on the signals emitted by the two pressure sensors SPC and SPA. In substance, the output signals from the sensor SM in this specific case are therefore the pressure differential signal PD, an air pressure signal PA and an air temperature signal TA.

## Claims

1. A sensor device (SM) for a fuel supply system associated with a heat engine, comprising a casing (1) containing first pressure sensor means (SPA) and second pressure sensor means (SPC) formed on a support (5B), the said first and second pressure sensor means being connected by respective apertures (AR, CARB) provided in the said casing (1) to a first and a second environment, separate from one another, for the purpose of detecting the pressure in the said first and second environment respectively, the said sensor device being characterised in that
said support is a ceramic support (5B) on which is adhered a second ceramic substrate (5A) as a membrane, and
temperature sensor means (1A) are positioned near the first aperture (AR) to sense the temperature of the said first environment, and
processing means (ELAB) are also supported by the said ceramic substrate (5A), in which
the ceramic support (5B) and substrate (5A) are shaped in such a way to form two pressure tight sealed chambers (5C),
the pressure sensors are of piezo resistive type, formed by technology of the thick film type, on the areas of the ceramic substrate (5A) corresponding to the chambers (5C), and
the said areas of the ceramic substrate (5A) corresponding to the chambers (5C) are connected to the first and second environment via o-ring type seals and the first and second apertures (AR, CARB) in the casing.

2. device (SM) according to Claim 1, characterised in that the said first (SPA) and second (SPC) pressure sensors are bridge sensors.

3. A device (SM) according to Claim 1 or 2, characterised in that the said processor means (ELAB) are operatively connected to the said first (SPA) and second (SPC) pressure sensor means, and configured in such a way as to emit an output signal (PD) indicative of the pressure difference between the said first and the said second environment.

4. A device (SM) according to Claim 3 characterised in that the said processor means (ELAB) are configured in such a way as to emit an output signal (TA) indicative of the temperature detected by the said temperature sensor means (1A).

5. A device (SM) according to Claim 4, characterised in that the said processor means (ELAB) are configured in such a way as to transmit the said signal indicative of the temperature (TA) and the said signal indicative of the pressure difference (PD) in digital form by means of a serial communication line.

6. A device (SM) according to Claim 5, characterised in that the said processor means comprise an electronic microprocessor circuit (ELAB).

7. A device (SM) according to any of Claims from 1 to 6, characterised in that the said temperature sensor means comprise a resistive sensor (1A).

8. A device (SM) according to Claim 7, characterised in that the said resistive temperature sensor (1A) is a sensor of the NTC type.

9. A device (SM) according to any of Claims from 1 to 8, characterised in that the said first environment is an internal combustion engine induction manifold and the said second environment is a fuel supply pipe to the said internal combustion engine,
the first aperture (AR) is conformed in such a way as to be sealingly connected to the said induction manifold and the second aperture (CARB) is conformed in such a way as to be sealingly connected to the said fuel supply tube,
the said temperature sensor means (1A) being configured in such a way as to detect the air temperature in the said induction manifold.

## Patentansprüche

1. Sensoranordnung (SM) für ein einer Brennkraftmaschine zugeordnetes Treibstoff-Versorgungssystem, das ein Gehäuse (1) umfaßt, das einen ersten Drucksensor (SPA) und einen zweiten Drucksensor (SPC) enthält, die auf einem Träger (5B) gebildet sind, wobei der erste und zweite Drucksensor über entsprechende, im Gehäuse (1) vorgesehene, voneinander getrennte Öffnungen (AR, CARB) mit einer ersten und einer zweiten Umgebung verbunden sind, um den Druck in der ersten, bzw. zweiten Umgebung zu erfassen und die Sensoranordnung dadurch gekennzeichnet ist, daß
der Träger ein keramischer Träger (5B) ist, auf dem ein zweites keramisches Substrat (5A) als eine Membrane geklebt ist, und
Temperatur-Sensormittel (1A) nahe der ersten Öffnung (AR) angeordnet sind, um die Temperatur der ersten Umgebung zu erfassen, und
Verarbeitungsmittel (ELAB) ebenfalls von dem keramischen Substrat (5A) gehalten sind, wobei
der keramische Träger (5B) und das Substrat (5A) so geformt sind, daß sie zwei fest abgedichtete Kammern (5C) bilden,
die Drucksensoren vom piezo-resistiven Typ und mit einer Technologie der Dickfilm-Type in den Bereichen auf dem keramischen Substrat (5A) hergestellt sind, die den Kammern (5C) entsprechen, und
diese, den Kammern (5C) entsprechenden Bereiche auf dem keramischen Substrat (5A) mit der ersten und der zweiten Umgebung über eine O-Ring-Dichtung und die erste und zweite Öffnung (AR, CARB) im Gehäuse verbunden sind.

2. Einrichtung (SM) nach Anspruch 1, **dadurch gekennzeichnet,** daß der erste (SPA) und zweite (SPC) Drucksensor Brücken-Sensoren sind.

3. Einrichtung (SM) nach Anspruch 1 oder 2, **dadurch gekennzeichnet,** daß die Verarbeitungsmittel (ELAB) mit dem ersten (SPA) und dem zweiten (SPC) Drucksensor wirkverbunden und so konfiguriert sind, daß sie ein Ausgangssignal (PD) liefern, das die Druckdifferenz zwischen der ersten und zweiten Umgebung anzeigt.

4. Einrichtung (SM) nach Anspruch 3, **dadurch gekennzeichnet,** daß die Verarbeitungsmittel (ELAB) in einer solchen Weise konfiguriert sind, daß sie ein Ausgangssignal (TA) liefern, das der durch den Temperatursensor (1A) erfaßten Temperatur entspricht.

5. Einrichtung (SM) nach Anspruch 4, **dadurch gekennzeichnet**, daß die Verarbeitungsmittel (ELAB) in einer solchen Weise konfiguriert sind, das sie das der Temperatur entsprechende Signal (TA) und das der Druckdifferenz entsprechende Signal (PD) über eine serielle Kommunikationsleitung in digitaler Form übertragen.

6. Einrichtung (SM) nach Anspruch 5, **dadurch gekennzeichnet**, daß die Verarbeitungsmittel eine elektronische Mikroprozessor-Schaltung (ELAB) umfassen.

7. Einrichtung (SM) nach einem der Ansprüche 1 bis 6, **dadurch gekennzeichnet**, daß der Temperatursensor einen resistiven Sensor (1A) umfasst.

8. Einrichtung (SM) nach Anspruch 7, **dadurch gekennzeichnet**, daß der resistive Temperatursensor (1A) ein NTC-Typ-Sensor ist.

9. Einrichtung (SM) nach einem der Ansprüche 1 bis 8, **dadurch gekennzeichnet**, daß die erste Umgebung ein Ansaugkopf einer Brennkraftmaschine und die zweite Umgebung eine Treibstoff-Versorgungsleitung zu dieser Brennkraftmaschine ist,
die erste Öffnung (AR) in einer solchen Weise ausgebildet ist, daß sie dichtend mit dem Ansaugkopf und die zweite Öffnung (CARB) in einer solchen Weise ausgebildet ist, daß sie dichtend mit der Treibstoff-Versorgungsleitung verbunden ist;
der Temperatursensor (1A) in einer solchen Weise konfiguriert ist, daß er die Lufttemperatur im Einlaßkopf erfaßt.

## Revendications

1. Dispositif capteur (SM) pour un système d'amenée de carburant associé à un moteur thermique, comprenant un carter (1) contenant des premiers moyens formant capteur de pression (SPA) et des deuxièmes moyens formant capteur de pression (SPC) formés sur un support (5B), lesdits premiers et deuxièmes moyens formant capteur de pression étant reliés par des ouvertures (AR, CARB) respectives ménagées dans ledit carter (1), à des premier et deuxième environnements, séparés l'un de l'autre, en vue de mesurer la pression régnant respectivement dans lesdits premier et deuxième environnements, ledit dispositif capteur étant caractérisé en ce que
ledit support est un support céramique (5B) sur lequel est appliqué en adhérence un deuxième substrat céramique (5A) à titre de membrane, et
des moyens formant capteur de température (1A) sont placés à proximité de la première ouverture (AR) afin de mesurer la température dudit premier environnement, et
des moyens de traitement (ELAB) sont également supportés par ledit substrat céramique (5A), dans lequel
le support céramique (5B) et le substrat (5A) sont formés de manière à constituer deux chambres (5C) isolées hermétiquement, étanches à la pression,
les capteurs de pression sont de type piézorésistifs, formés par une technologie de type à film épais, sur les zones des substrats céramiques (5A) correspondant aux chambres (5C), et
lesdites zones du substrat céramique (5A) correspondant aux chambres (5C) sont reliées au premier et deuxième environnement, via des joints d'étanchéité de type joint torique, et aux première et deuxième ouvertures (AR, CARB) ménagées dans le carter.

2. Dispositif (SM) selon la revendication 1, caractérisé en ce que lesdits premier (SPA) et deuxième (SPC) capteurs de pression sont des capteurs en pont.

3. Dispositif (SM) selon la revendication 1 ou 2, caractérisé en ce que lesdits moyens de traitement (ELAB) sont reliés en fonctionnement auxdits premiers (SPA) et deuxièmes (SPC) moyens formant capteurs de pression et conçus de manière à émettre un signal de sortie (PD) indicatif de la différence de pression entre lesdits premier et deuxième environnements.

4. Dispositif (SM) selon la revendication 3, caractérisé en ce que lesdits moyens de traitement (ELAB) sont conçus de manière à émettre un signal de sortie (TA) indicatif de la température mesurée par lesdits moyens formant capteur de température (1A).

5. Dispositif (SM) selon la revendication 4, caractérisé en ce que lesdits moyens de traitement (ELAB) sont conçus de manière à transmettre ledit signal indicatif de la température (TA) et ledit signal indicatif de la différence de pression (PD) sous forme numérique au moyen d'une ligne de communication sérielle.

6. Dispositif (SM) selon la revendication 5, caractérisé en ce que lesdits moyens de traitement comprennent un circuit à micro-processeur électronique (ELAB).

7. Dispositif (SM) selon l'une quelconque des revendications 1 à 6, caractérisé en ce que lesdits moyens formant capteur de température comprennent un capteur résistif (1A).

8. Dispositif (SM) selon la revendication 7, caractérisé en ce que ledit capteur de température (1A) résistif est un capteur de type NTC.

9. Dispositif (SM) selon l'une quelconque des revendications 1 à 8, caractérisé en ce que ledit premier environnement est un collecteur d'admission de moteur à combustion interne et ledit deuxième environnement est un tuyau d'amenée de carburant menant audit moteur à combustion interne,
la première ouverture (AR) est formée de manière à être reliée de manière étanche audit collecteur d'admission et ladite deuxième ouverture (CARB) est formée de manière à être reliée de manière étanche audit tube d'amenée de carburant,
lesdits moyens formant capteur de température (1A) étant conçus de manière à mesurer la température de l'air dans ledit collecteur d'admission.
